# EUROPEAN PATENT APPLICATION

(11) **EP 3 944 208 A1**
(43) Date of publication of application: **26.01.2022**
(21) Application number: 20187245.4
(22) Date of filing: 22.07.2020
(51) Int. Cl.: G08C 17/02, H04W 48/18

(54) **A MOBILE COMMUNICATION DEVICE IN AN INDUSTRIAL FACILITY**

(71) Applicant: Siemens Aktiengesellschaft, 80333 München (DE)
(72) Inventor: Lampe, Mattias, Beijing, 100102 (CN); Meyer, Martin, 90425 Nürnberg (DE); Richter, Siegfried, 91207 Lauf (DE); Sinn, Ulrich, 91056 Erlangen (DE); Weiler, Christoph, 75015 Bretten (DE)

(57) **Abstract**

The current disclosure describes a mobile communication device for communicating with a plurality of network devices in an industrial facility. The mobile communication device comprises a radio subsystem for transmitting and receiving data, and a controller for operating the radio subsystem. The radio subsystem is configured to be operated in one of a first radio configuration and a second radio configuration, wherein each radio configuration from the first and second radio configurations includes one or more transmission and reception parameters associated with the radio subsystem. The controller operates the radio subsystem in one of the first radio configuration and the second radio configuration based on a location of the mobile communication device in the industrial facility.

## Description

### Background

The current invention relates to wireless communication in industrial automation environments and more specifically, to mobile communication devices in industrial facilities. With increasing implementation of industrial internet of things and other Industry 4.0 concepts in factories, plants and other industrial facilities, a plurality of assets in these facilities will be connected wirelessly. Several wireless networks and technologies such as cellular networks, local area networks, short range communication techniques such as Bluetooth, Near Field Communication, etc., may be utilized in enabling wireless communication.

### Description

With the introduction of 5G NPNs (Non-Public Network), heterogeneous networks involving a plurality of wireless radio networks using a plurality of frequencies are expected to play a crucial role in industrial communication and automation networks. In factory automation, for instance, 5G communication is expected to enhance existing (legacy) communication infrastructure. Accordingly, 5G networks may coexist with other existing wireless communication systems.

Especially with 5G NR-U (New Radio Unlicensed), 5G networks will be able to work in unlicensed frequency bands, and thus, 5G networks may have to share the wireless radio resources together with WLAN networks existing in the industrial plant or facility. Enabling the use of unlicensed spectrum for 5G in NPNs is highly desirable because there are no additional costs for license fees. However, such parallel deployment of 5G and WLAN networks using the same shared spectrum would lead to interferences and disturbances, and would negatively affect communication latency, reliability, etc.

To address this challenge, different wireless networks with different radio configurations are implemented in different areas in the industrial facility. By ensuring spatial separation, the issue of interference is substantially reduced. However, mobile machines may be equipped with a radio system that is configured and parameterized for specific wireless network deployed in a specific area. If the machines leave the specific area, the parameters applicable to the new area are required. In the absence of the same, communication with these mobile machines may be interrupted. Accordingly, there is a need for a method and device which is capable of addressing the above mentioned matter.

Accordingly, the current disclosure describes mobile communication device accordingly to claim 1, method according to claim 7 and non-transitory storage medium according to claim 12 which addresses the above-mentioned aspects.

Accordingly, the current disclosure describes a mobile communication device for communicating with a plurality of network devices in an industrial facility. The mobile communication device comprises a radio subsystem for transmitting and receiving data, and a controller for operating the radio subsystem. The radio subsystem is configured to operate in one of a first radio configuration and a second radio configuration, each radio configuration from the first and second radio configurations includes one or more transmission and reception parameters associated with the radio subsystem. The controller operates the radio subsystem in one of the first radio configuration and the second radio configuration based on a location of the mobile communication device in the industrial facility. Accordingly, the current invention discloses a mobile communication device which is capable of changing its radio configuration based on the location of the mobile communication device within the industrial facility or upon entering or leaving the industrial facility. Accordingly, a plurality of wireless networks with different radio access technologies may be deployed within different areas of the industrial facility, to mitigate interference due to the plurality of wireless technologies by ensuring that the signals of a particular wireless network are relatively limited to its corresponding area. Additionally, the mobile communication device can accordingly determine a radio configuration to be used in a particular location based on the wireless network associated with the area in which the particular location is. Hence, the mobile communication device can communicate in different areas using different radio configurations.

In an example, the radio subsystem comprises a transceiver configured to transmit and/or receive radio signals via carrier frequencies in a first set of frequencies associated with the first radio configuration and a second set of frequencies associated with the second radio configuration, at least one first antenna connectable to the transceiver, to transmit and/or receive radio signals via carrier frequencies in the first set of frequencies, at least one frequency transverter connectable to transceiver, configured to convert radio signals between the a first set of frequencies and the second set of frequencies and vice versa, and at least one second antenna connected to the at least one frequency transverter, to transmit and /or receive radio signals via carrier frequencies in the second set of frequencies. By means of antenna diversity, the current disclosure allows for utilization of a single mobile communication device within multiple areas of the industrial facility having different radio configurations.

In an example, the mobile communication device further comprises a configuration database comprising a plurality of radio configurations including the first and second radio configurations, wherein the plurality of radio configurations are obtained from a network management device. Accordingly, a central entity such as the network management device can coordinate with the mobile communication device to ensure that mobile communications device is updated with the radio configurations associated with the various wireless technologies and the related areas within the industrial facility.

In an example, the first radio configuration is associated with a first set of frequencies wherein each frequency from the first set of frequencies, is from a licensed radio spectrum, and the second radio configuration is associated with a second set of frequencies wherein each frequency from the second set of frequencies, is from an unlicensed radio spectrum. Accordingly, this allows for utilization of licensed and unlicensed radio spectrums without interference. In another example, the first radio configuration is associated with omnidirectional transmission at a first transmission power and the second radio configuration is associated with directed beam transmission at a second transmission power. Accordingly, by using either omni directional transmission or directional transmission, the mobile communication device can flexibly transmit data while ensuring that the transmission does not cause additional interference.

In an example, the mobile communication device further comprises a location detection system configured to determine the location of the mobile communication device in the industrial facility. Accordingly, the mobile communication device can determine its location without having to rely on any other device.

In another aspect, the current disclosure describes a method of configuring a mobile communication device. The mobile communication device is configured to communicate with a plurality of network devices in an industrial facility. The method comprises determining a radio configuration from a plurality of radio configurations based on a location of the mobile communication device within the industrial facility, and configuring a radio subsystem of the mobile communication device according to the determined radio configuration for transmitting one or more data packets using the configured radio subsystem. Each radio configuration from the plurality of radio configuration includes one or more transmission and reception parameters associated with the radio subsystem.

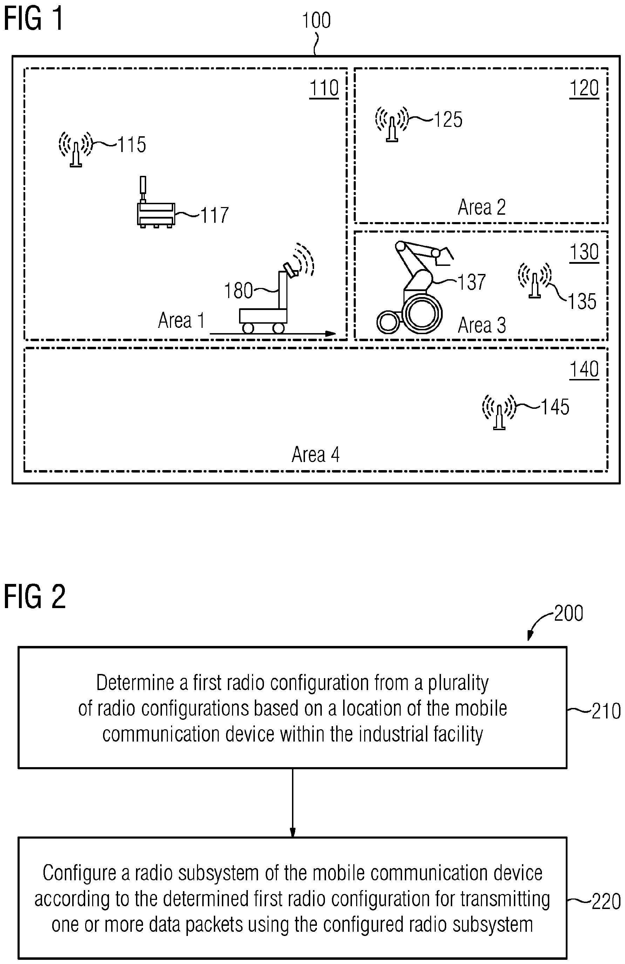

In yet another aspect, the current disclosure describes a non-transitory storage medium for configuring a mobile communication device. The non-transitory storage medium contains one or more instructions, which when executed by one or more processors, causes the one or more processors to determine a radio configuration from a plurality of radio configurations based on a location of the mobile communication device within the industrial facility, wherein each radio configuration from the plurality of radio configuration includes one or more transmission and reception parameters associated with the radio subsystem; and configure a radio subsystem of the mobile communication device according to the determined radio configuration for transmitting one or more data packets using the configured radio subsystem. The advantages of the device and its examples apply to the method and non-transitory storage medium described herein. These aspects are further described in relation figures 1-3.

The following detailed description references the drawings, wherein:
Figure 1 illustrates an example section of an example industrial facility comprising a plurality of wireless technologies in a plurality of areas in the industrial facility;
Figure 2 illustrates an example method for configuring a mobile communication device; and
Figure 3 is a block diagram of an example mobile communication device for communicating with one or more network devices network in the industrial facility.

Figure 1 illustrates a section 100 of an industrial wireless network in an industrial facility. Industrial facility herein refers to any environment where one or more industrial processes such as manufacturing, refining, smelting, assembly of equipment may take place and includes process plants, oil refineries, automobile factories, etc. The industrial system includes a plurality of industrial devices including control devices, field devices, mobile devices, operator stations, etc. The control devices include process controllers, programmable logic controllers, supervisory controllers, automated guidance vehicles, robots, operator devices, etc. One or more control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. Additionally, the industrial system includes a plurality of mobile devices including one or more robots for performing a plurality of operations such as welding, assembly of parts; one or more autonomous guidance vehicles for transportation and handling of material, one or more assets with RFID tags on conveyor belts, etc., in the industrial plant. Additionally, the industrial system may include an operator station for displaying the status of the industrial plant to an operator and for allowing the operator to define KPIs for the control of the industrial processes in the facility. All the industrial devices may be connected to each other via a plant network (realized via wired and wireless technologies).

Communication in the above mentioned plant network happens through wired and wireless means or technologies. A section 100 of the industrial facility including one or more such wireless technologies is illustrated in figure 1. The section 100 comprises a plurality of areas (110, 120, 130, 140). Each area includes a wireless sub-network based on a particular radio configuration and a plurality of network devices connected to the wireless sub-network. Radio configuration herein refers to one or more transmission and reception parameters used by the radios of network devices. Radio configuration herein includes frequency bands used as carrier frequencies, maximum transmission power to be used, antenna characteristics, etc.

The plurality of network devices includes a plurality of industrial gateway devices (115, 125, 135, 145; also referred to as gateway devices) and a plurality of user devices (shown in the figure as user device 137). Gateway devices herein refers to one or more network devices capable of connecting the user devices to the wireless network. Examples of gateway devices include base stations, routers, switches, relays, access points, etc.

The plurality of gateway devices may be affixed to a plurality of locations in the industrial facility. The plurality of the user devices (such as user device 137) in the facility are connected to one or more industrial gateway devices (135) to connect to the wireless sub-network of the area (130) and for communicating information with the other devices and systems in the industrial facility.

In an example, the plant network may further comprise a network management device (not shown in figure 1) for managing the wireless sub-networks. The network management device is configured to manage and mitigate interference in the plant network. In this regard, the network management device includes information regarding the radio configurations utilized in the various areas of the industrial facility.

Additionally, section 100 includes a mobile communication device 180 which is capable of moving about the plurality of areas in the plant. The mobile communication device 180 is capable of changing its radio configuration based on its location within the industrial facility to communicate using the different wireless sub networks in the plurality of areas. This is further explained in description of figure 2.

Figure 2 illustrates a method 200 for configuring the mobile communication device 180. As mentioned previously, the mobile communication device 180 is capable of moving about the plurality of areas in the industrial facility.

Accordingly, for example, the mobile communication device 180 may move from area 110 to area 130. In the example, the mobile communication device 180 is an automated guidance vehicle carrying an object from a first station in the area 110 to a second automated guidance vehicle 137 located in the area 130. A first wireless sub-network is utilized by the devices in the area 110. Similarly, a second wireless sub-network is utilized by the devices in the area 130. Radio configuration associated with the first wireless sub-network (also referred to as first radio configuration) is different from the radio configuration associated with the second wireless sub-network (also referred to a second radio configuration). For example, the frequency range of the first radio configuration is in the licensed radio spectrum and the frequency range of the second radio configuration is in the unlicensed radio spectrum. Accordingly, the method 200 is executed upon the movement of the mobile device from the area 110 to area 130. In an example, the method 200 is executed periodically or upon detecting a movement of the mobile communication device 180. Upon execution of the method 200, the radio configuration of the mobile communication device is changed from the one associated with the first wireless sub-network to the one associated with the second wireless sub-network, thereby allowing the mobile communication device 180 to communicate with the device 137. The method 200 is further described below.

At step 210, the mobile communication device 180 determines a radio configuration from a plurality of radio configurations. The mobile communication device 180 determines the radio configuration from a plurality of radio configurations based on the location of mobile communication device within the industrial facility.

In an example, the mobile communication device 180 includes a database or a memory module comprising the plurality of radio configurations. Each radio configuration includes information regarding a plurality of transmission and reception parameters to be used, radio resources to be used, etc. Additionally, each radio configuration is associated with an area in the industrial facility. The area information of the associated area is stored in the radio configuration. Additionally, the mobile communication device 180 includes a location detection sub-system for determining the location and the orientation of the mobile communication device 180. Using the location detection sub-system, the mobile communication device 180 is able to determine its location in the industrial facility. Then, based on the location, the mobile communication device 180 determines the radio configuration from the plurality of radio configurations. This is done by determining in which area the determined location of the mobile communication device 180 is present. For example, each area information stored in each radio configuration may provide geographical indications of the borders of the corresponding area. Based on this and the determined location, the mobile communication device 180 can determine the area in which the mobile communication device 180 is present and accordingly, determine the radio configuration associated with the corresponding area from the plurality of radio configurations.

Then, at step 220, the mobile radio configuration device configures a radio subsystem of the mobile communication device 180 according to the determined radio configuration for transmitting one or more data packets using the configured radio subsystem. The mobile radio configuration includes a radio subsystem which is capable of being configured to transmit and receive radio signals using a plurality of radio configurations. The radio subsystem is configured based on the determined radio configuration to enable the mobile communication device to connect to the wireless sub network of the are within which the mobile communication device is present. For example, based on the determined radio configuration, one or more operational parameters (i.e. Transmission or reception parameters) of the radio sub system are set. For example, the frequencies to be used as carrier frequencies, transmission power, antenna characteristics such as gain, are set.

It may be noted that while each radio configuration explained above, is associated with an area from a plurality of areas, each radio configuration can be associated with two or more areas from the plurality of areas in the industrial facility as well.

In an example, the mobile communication device 180 is configured to coordinate with the network management device to update the plurality of radio configurations. The network management device manages the plurality of wireless sub-networks and accordingly, includes radio configurations which were newly added or were recently modified. For example, due to interference, a radio configuration of a wireless sub-network may be adjusted. This updated radio configuration is available at the network management device. The network management device is configured to transmit the updated radio configuration to the mobile communication device 180.

In an example, the mobile communication device 300 include a tag reader capable of reading a printed tag or a wireless tag (such Quick Response/QR code, bar code, radio frequency identification/RFID code, near field communication / NFC code). Accordingly, in an example, where communication is disrupted, the mobile communication device 300 can obtain a radio configuration by reading a tag affixed to a processing station or any such predefined location. Then, using the obtained radio configuration, the mobile communication device 300 can configure its radio subsystem 340 to connect to the wireless network in the area.

In an example, the one or more radio configuration may be manually programmed at the network management device using a graphical user interface. In another example, the one or more radio configurations are generated using a machine learning model. The machine learning model may receive historic network data and generate the radio configurations associated with the one or more areas based on the historic network data.

The present disclosure can take a form of a computer program product comprising program modules accessible from computer-usable or computer-readable medium storing program code for use by or in connection with one or more computers, processing units, or instruction execution system. For example, the steps (or sub steps) of the method 200 may be realized across one or more devices.

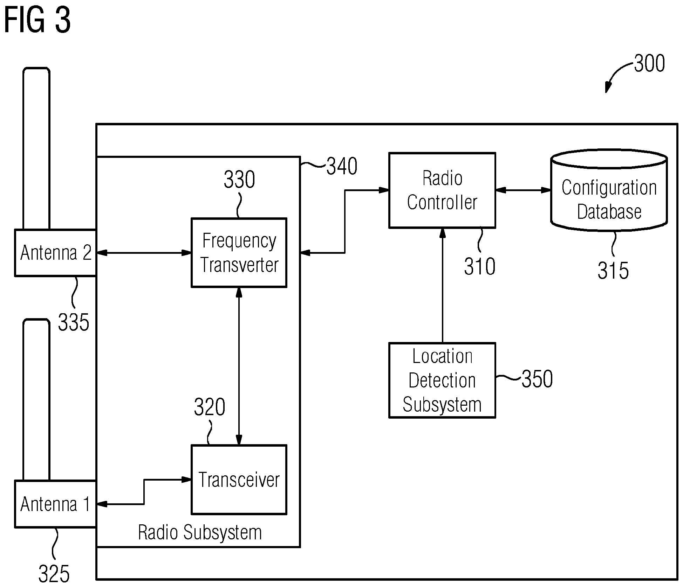

Accordingly, the current disclosure describes a mobile communication device 300 as shown in figure 3. The network device 300 is configured to communicate with one or more network devices in the one or more areas in an industrial facility. The mobile communication device 300 comprises a radio subsystem 340 for transmitting and receiving data from the one or more network devices. The radio subsystem 340 is controlled by a radio controller 310. The radio controller 310 includes one or more processors and memory modules. The radio controller 310 is connected to a configuration database 315 which includes the plurality of radio configurations as mentioned above. Similarly, the radio controller 310 is connected to a location detection subsystem 350. The location detection subsystem 350 is configured to detect the location of the mobile communication device 300 in the industrial facility and transmit the detected location to the radio controller 310.

The radio subsystem 340 includes a transceiver 320 configured to transmit and receive radio signals. Accordingly, the transceiver is connected to an antenna subsystem or first antenna 325 for sending and receiving radio signals using a carrier frequency from a first set of frequencies. Additionally, the transceiver 320 is connected to a frequency transverter 330 (also referred to as transverter 330). In an example, the transverter 330 comprises a mixer, an oscillator and an antenna connection to a second antenna subsystem or a second antenna 335. The second antenna is for sending and receiving radio signals using a carrier frequency from a second set of frequencies. The transverter 330 is for converting radio signals between the first set of frequencies range and the second set of frequencies. The mixer of the transverter 330 converts radio signals between the first and second set of frequencies on the basis of a supplied oscillator signal, bidirectional. In particular, the transverter 330 for a bidirectional frequency conversion includes a switch between a transmitting mode and a receiving mode.

The configuration database 315 comprising a plurality of radio configurations, includes a first radio configuration and a second radio configuration. The first radio configuration is associated with the first set of frequencies wherein each frequency from the first set of frequencies. Similarly, the second radio configuration is associated with the second set of frequencies. The radio controller configures the radio sub system based on one of the first or the second radio configurations depending on the location of the mobile communication device 300. For example, when the mobile communication device 300 is in the area 110, the radio controller 310 configures the radio subsystem 340 according to the first radio configuration. Accordingly, since the first set of frequencies are to be used, the radio controller 310 enables the first antenna 325 and disables the frequency transverter 330 and the second antenna 335. Similarly, when the mobile communication device 300 is in the area 130, the radio controller 310 configures the radio subsystem 340 according to the second radio configuration. Accordingly, since the second set of frequencies are to be used, the radio controller 310 disables the first antenna 325 and enables the frequency transverter 330 and the second antenna 335. Similarly, the mixer and the oscillator of the transverter are also configured by the radio controller using the determined radio configuration.

In an example, the antenna characteristics of determined radio configuration stored in the configuration database, indicate whether omni directional transmission or directional transmission is to be used by the radio sub system. For example, the network management device is configured to determine a particular transmission or antenna characteristics based on a route (also referred to as a movement route) associated with the mobile communication device and the location of the gateway device in a particular area. The network management device can fetch a movement route associated with a mobile communication device (such as an automated guidance vehicle) from control system (such as an automated guidance controller) and determine the areas through which the mobile communication device will be passing through, the gateway devices (access points) in these areas and the relative direction and orientation of the mobile communication device to these gateway devices as the mobile communication device moves through the areas. Then, using this information, the network management device can determine a radio configuration including transmission parameters indicating if omni directional transmission is to be used or directional transmission is to be used along with related information (such as transmission power, orientation of the antennas in case of directional transmission, etc.) . In an example, if the route taken by the mobile communication device 300 is not in accordance with the predefined route from the automated guidance vehicle controller, the mobile communication device 180 may use a default radio configuration including omni directional transmission.

In an example, when the mobile communication device 300 is in a location not associated with any radio configuration, the mobile communication device 300 sends radio signals via the first antenna 325 and the second antenna 335 simultaneously. Alternatively, the mobile communication device 300 can be designed and set up to send radio signals initially either only via the first antenna 325 or only via the second antenna 335. Only after a predetermined time or after a predetermined number of failed transmission attempts does the mobile communication device 300 sends the radio signals via the previously unused second antenna 335 or first antenna 325.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A mobile communication device (300) for communicating with a plurality of network devices (115, 117, 125, 135, 137, 145) in an industrial facility, the mobile communication device (300) comprising:
a. a radio subsystem (340) for transmitting and receiving data, the radio subsystem (340) configured to operate in one of a first radio configuration and a second radio configuration, wherein each radio configuration from the first and second radio configurations includes one or more transmission and reception parameters associated with the radio subsystem (340); and
b. a controller (310) for operating the radio subsystem (340) in one of the first radio configuration and the second radio configuration based on a location of the mobile communication device (300) in the industrial facility.

2. The mobile communication device (300) as claimed in claim 1, wherein the radio subsystem (340) comprises:
i. a transceiver (320) configured to transmit and/or receive radio signals via carrier frequencies in a first set of frequencies associated with the first radio configuration and a second set of frequencies associated with the second radio configuration,
ii. at least one first antenna (325) connectable to the transceiver, to transmit and/or receive radio signals via carrier frequencies in the first set of frequencies,
iii. at least one frequency transverter (330) connectable to transceiver (320), configured to convert radio signals between the first set of frequencies and the second set of frequencies and vice versa, and
iv. at least one second antenna (335) connected to the at least one frequency transverter (330)), to transmit and /or receive radio signals via carrier frequencies in the second set of frequencies.

3. The mobile communication device (300) as claimed in claim 1, wherein the mobile communication device (300) further comprises a configuration database (315) comprising a plurality of radio configurations including the first and second radio configurations, wherein the plurality of radio configurations are obtained from a network management device.

4. The mobile communication device (300) as claimed in claim 1, wherein the first radio configuration is associated with a first set of frequencies wherein each frequency from the first set of frequencies, is from a licensed radio spectrum, and wherein the second radio configuration is associated with a second set of frequencies wherein each frequency from the second set of frequencies, is from an unlicensed radio spectrum.

5. The mobile communication device (300) as claimed in claim 1, wherein the first radio configuration is associated with omnidirectional transmission at a first transmission power and the second radio configuration is associated with directed beam transmission at a second transmission power.

6. The mobile communication device (300) as claimed in claim 1, wherein the mobile communication device (300) further comprises a location detection system (350) configured to determine the location of the mobile communication device (300) in the industrial facility.

7. A method (200) of configuring a mobile communication device (300), the mobile communication device (300) configured to communicate with a plurality of network devices (115, 117, 125, 135, 137, 145) in an industrial facility, the method (200), comprising:
a. determining (210) a radio configuration from a plurality of radio configurations based on a location of the mobile communication device (300) within the industrial facility, wherein each radio configuration from the plurality of radio configuration includes one or more transmission and reception parameters associated with the radio subsystem (340); and
b. configuring (220) a radio subsystem (340) of the mobile communication device (300) according to the determined radio configuration for transmitting one or more data packets using the configured radio subsystem (340).

8. The method (200) as claimed in claim 7, wherein the plurality of radio configurations includes a first radio configuration associated with a first set of frequencies and a second radio configuration associated with a second set of frequencies; wherein each frequency from the first set of frequencies, is from a licensed radio spectrum, and each frequency from the second set of frequencies, is from an unlicensed radio spectrum.

9. The method (200) as claimed in claim 7, wherein configuring the radio subsystem (340) comprises enabling one of a first antenna (325) and a second antenna (335) based on the determined radio configuration, wherein the first antenna (325) in configured to transmit and/or receive radio signals via carrier frequencies in a first set of frequencies and the second antenna (335) is configured to transmit and /or receive radio signals via carrier frequencies in a first set of frequencies.

10. The method (200) as claimed in claim 7, wherein configuring the radio subsystem (340) comprises configuring one or more antennas of the radio subsystem (340) to enable one of omnidirectional and directional transmission.

11. The method (200) as claimed in claim 7, wherein configuring the radio system (340) comprises determining a transmission power based on the determined radio configuration.

12. A non-transitory storage medium for configuring a mobile communication device, the non-transitory storage medium comprising one or more instructions, which when executed by one or more processors, causes the one or more processors to:
a. determine a radio configuration from a plurality of radio configurations based on a location of the mobile communication device (300) within the industrial facility, wherein each radio configuration from the plurality of radio configuration includes one or more transmission and reception parameters associated with the radio subsystem (340); and
b. configure a radio subsystem (340) of the mobile communication device (300) according to the determined radio configuration for transmitting one or more data packets using the configured radio subsystem (340).
